# EUROPÄISCHE PATENTSCHRIFT

(11) **EP 3 511 307 B1**
(45) Veröffentlichungstag und Bekanntmachung des Hinweises auf die Patenterteilung: **22.07.2020**
(21) Anmeldenummer: 18151894.5
(22) Anmeldetag: 16.01.2018
(51) Int. Cl.: C04B 35/01, C04B 35/05, C04B 35/10, C04B 35/107, C04B 35/443, C04B 35/653

(54) **SCHMELZROHSTOFF ZUR HERSTELLUNG EINES FEUERFESTEN ERZEUGNISSES, EIN VERFAHREN ZUR HERSTELLUNG DES SCHMELZROHSTOFFS SOWIE EINE VERWENDUNG DES SCHMELZROHSTOFFS**
RAW MELT MATERIAL FOR THE MANUFACTURE OF A REFRACTORY PRODUCT, A METHOD FOR PRODUCING THE RAW MELT MATERIAL, AND USE OF THE RAW MELT MATERIAL
MATIÈRE PREMIÈRE EN FUSION DESTINÉE À LA FABRICATION D'UN PRODUIT RÉFRACTAIRE, PROCÉDÉ DE FABRICATION DE MATIÈRE PREMIÈRE EN FUSION AINSI QU'UTILISATION DE LA MATIÈRE PREMIÈRE EN FUSION

(43) Veröffentlichungstag der Anmeldung: 17.07.2019
(73) Patentinhaber: Refractory Intellectual Property GmbH & Co. KG, 1100 Wien (AT)
(72) Erfinder: PIRIBAUER, Christoph, 56203 Hoehr-Grenzhausen (DE); FREIBERGER, Norbert, 8054 Graz (AT); DJURICIC, Boro, 8700 Leoben (AT); MÜHLHÄUSSER, Jürgen, 8700 Leoben (AT); NILICA, Roland, 8715 St. Marein-Feistritz (AT)
(74) Vertreter: Berkenbrink, Kai-Oliver

(56) Entgegenhaltungen:
- EP-A1- 0 482 981
- EP-A2- 0 171 846
- US-A- 5 212 123
- YU CHAO ET AL: "Synthesis of monophase Al4O4C and the effect of Al4O4C addition to MgO-C refrac", JOURNAL OF ALLOYS AND COMPOUNDS, Bd. 579, 1. Januar 2013 (2013-01-01), Seiten 348-354, XP028732063, ISSN: 0925-8388, DOI: 10.1016/J.JALLCOM.2013.06.088

## Beschreibung

Die Erfindung betrifft einen Schmelzrohstoff zur Herstellung eines feuerfesten Erzeugnisses, ein Verfahren zur Herstellung des Schmelzrohstoffs sowie eine Verwendung des Schmelzrohstoffs.

Der Begriff "feuerfestes Erzeugnis" im Sinne der Erfindung bezeichnet insbesondere feuerfeste Erzeugnisse mit einer Einsatztemperatur von über 600°C und bevorzugt feuerfeste Werkstoffe gemäß DIN 51060:2000-06, also Werkstoffe mit einem Kegelfallpunkt > SK17. Die Ermittlung des Kegelfallpunktes kann insbesondere gemäß DIN EN 993-12:1997-06 erfolgen.

Feuerfeste Erzeugnisse werden in der Regel aus einem Versatz hergestellt. Unter einem "Versatz" wird bekanntermaßen eine Zusammensetzung aus einer oder mehreren Komponenten beziehungsweise Rohstoffen bezeichnet, durch die mittels einer Temperaturbehandlung ein feuerfestes keramisches Erzeugnis herstellbar ist.

Die Rohstoffe, aus denen ein solch feuerfester Versatz zur Herstellung eines feuerfesten Erzeugnisses herstellbar ist, basieren regelmäßig auf wenigstens einem der Oxide MgO, CaO, Al₂O₃, SiO₂ oder ZrO₂. Dabei wird ein auf wenigstens einem der Oxide MgO oder CaO basierender Rohstoff als basisch und ein auf wenigstens einem der Oxide Al₂O₃, SiO₂ oder ZrO₂ basierender Rohstoff als nicht-basisch oder als sauer bezeichnet.

Neben den vorbezeichneten Oxiden können Rohstoffe auch nicht-oxidische Substanzen aufweisen, beispielsweise Carbide in Form von SiC, Al₄C₃ oder Al₂OC.

In Abhängigkeit von den Einsatzbedingungen des aus dem Versatz hergestellten feuerfesten Erzeugnisses müssen die Rohstoffe für den zur Herstellung des Erzeugnisses verwendeten Versatz ausgewählt werden. So müssen für feuerfeste Erzeugnisse, die einem basischen Angriff ausgesetzt sind, beispielsweise basischen Schlacken, basische Rohstoffe gewählt werden. Entsprechend müssen für feuerfeste Erzeugnisse, die einem sauren Angriff ausgesetzt sind, nicht-basische Rohstoffe gewählt werden.

Zur Verbesserung der Schlackenbeständigkeit eines feuerfesten Erzeugnisses ist es ferner vorteilhaft, wenn der Versatz zur Herstellung des Erzeugnisses nicht-oxidische Rohstoffe umfasst, da diese ein günstige Benetzungsverhalten gegenüber Schlacken aufweisen. Zahlreiche dieser nicht-oxidischen Rohstoffe, insbesondere Al₄C₃ und Al₂OC, neigen jedoch zur Hydratation und sind unter Umgebungsbedingungen daher nur begrenzt beständig.

Ferner ist die thermische Dehnung des Rohstoffs bei der Verwendung des feuerfesten Erzeugnisses zu berücksichtigen. So weist beispielsweise Korund (Al₂O₃) eine thermische Dehnung von 8 ppm/K und Magnesia (MgO) eine thermische Dehnung von 13 ppm/K auf. ZrO₂ hat eine thermische Dehnung von etwa 7 ppm/K und erfährt zudem Volumensprünge bei seinen temperaturabhängigen Modifikationswechseln, die üblicherweise als Martensitische Transformation bezeichnet werden.

Bekanntermaßen ist eine möglichst niedrig thermische Dehnung eines feuerfesten Rohstoffs jedoch vorteilhaft für das Thermoschockverhalten des unter Verwendung dieses Rohstoffs hergestellten feuerfesten Erzeugnisses.

EP 0 171 846 A2 offenbart, 150kg kalzinierte Tonerde, 3kg MgO und 13kg gemahlenen Koks zu vermischen, brikettieren, erschmelzen und in eine Kokille abzugießen und das danach nach Abkühlung erhaltene Produkt als Schleifmittel zu verwenden; das erhaltene Produkt enthielt 4-5 Gew-% Al₄C₃. EP 0 482 981 A1 und US 5,212,123 offenbaren den Einsatz von Schmelzrohstoffen aus unter anderem Magnesiaspinellen und Al₄O₄C. Yu Chao et al. ("Synthesis of monophase Al4O4C and the effect of Al4O4C addition to MgO-C refractory", Journal of Alloys and Compounds, BD. 579, S. 348-354) offenbaren Al₄O₄C als Antioxidanz für C-haltige Werkstoffe.

Der vorliegenden Erfindung liegt die Aufgabe zugrunde, einen Rohstoff zur Herstellung eines feuerfesten Erzeugnisses zur Verfügung zu stellen.

Insbesondere liegt der Erfindung die Aufgabe zugrunde, einen Rohstoff zur Herstellung eines feuerfesten Erzeugnisses zur Verfügung zu stellen, welcher eine gute Beständigkeit sowohl gegenüber einem basischen Angriff als auch einem nicht-basischen Angriff aufweist, insbesondere eine gute Beständigkeit gegenüber basischen und nicht-basischen Schlacken.

Ferner liegt der Erfindung die Aufgabe zugrunde, einen Rohstoff zur Herstellung eines feuerfesten Erzeugnisses zur Verfügung zu stellen, welcher ein günstiges Benetzungsverhalten gegenüber Schlacken aufweist und nicht zur Hydratation neigt.

Ferner liegt der Erfindung die Aufgabe zugrunde, einen Rohstoff zur Herstellung eines feuerfesten Erzeugnisses zur Verfügung zu stellen, welcher eine geringe thermische Dehnung aufweist.

Zur Lösung dieser Aufgaben wird erfindungsgemäß zur Verfügung gestellt ein Schmelzrohstoff zu Herstellung eines feuerfesten Erzeugnisses gemäß Anspruch 1.

Bei dem erfindungsgemäßen Rohstoff handelt es sich um einen völlig neuartigen Schmelzrohstoff, also einen Rohstoff, der erhalten wurde aus einer abgekühlten Schmelze. Der erfindungsgemäße Schmelzrohstoff weist eine mineralogische Zusammensetzung auf, welche zum Einen als mineralogische Phase Magnesiaspinell mit einem überstöchiometrischen Anteil von Al₂O₃ (nachfolgend auch nur als "überstöchiometrischer Magnesiaspinell" bezeichnet) und zum anderen die mineralogische Phase Al₄O₄C umfasst. Neben diesen mineralogischen Phasen in Form von überstöchiometrischem Magnesiaspinell und Al₄O₄C kann der erfindungsgemäße Schmelzrohstoff eine oder mehrere weitere mineralogische Phasen aufweisen.

Überraschend hat sich erfindungsgemäß herausgestellt, dass der neuartige, erfindungsgemäße Schmelzrohstoff hervorragend als Rohstoff zur Herstellung eines feuerfesten Erzeugnisses verwendbar ist. So hat sich erfindungsgemäß herausgestellt, dass der Schmelzrohstoff eine hervorragende Beständigkeit sowohl gegenüber einem basischen wie auch einem nicht-basischen Angriff aufweist, insbesondere eine hervorragende Beständigkeit gegenüber basischen und nicht-basischen Schlacken. Die Erfinder vermuten, dass diese gute Beständigkeit auf der spezifischen Kombination des sowohl MgO als auch Al₂O₃ umfassenden, überstöchiometrischen Magnesiaspinells und der nicht oxidischen Aluminiumoxicarbidphase in Form von Al₄O₄C beruht.

Ferner weist der erfindungsgemäße Schmelzrohstoff ein äußerst günstiges Benetzungsverhalten gegenüber Schlacken auf. Dieses günstige Benetzungsverhalten, das mit dem Benetzungsverhalten von Kohlenstoff in Al₂O₃-Kohlenstoff-Steinen und MgO-Kohlenstoff-Steinen vergleichbar ist, ist wahrscheinlich auf die Gegenwart der nicht-oxidischen Phase in Form von Al₄O₄C zurückzuführen.

Ferner hat sich erfindungsgemäß überraschend herausgestellt, dass der erfindungsgemäße Schmelzrohstoff nur eine äußerst geringe thermische Dehnung aufweist, so dass aus dem erfindungsgemäßen Schmelzrohstoff ein feuerfestes Erzeugnis mit einem guten Thermoschockverhalten herstellbar ist.

Bei dem überstöchiometrischen Magnesiaspinell, den der erfindungsgemäße Schmelzrohstoff als eine mineralogische Phase aufweist, handelt es sich um einen Magnesiaspinell mit einem überstöchiometrischen Einbau von Al₂O₃. Bei Magnesiaspinell handelt es sich bekanntermaßen um eine mineralogische Phase aus den Oxiden MgO und Al₂O₃, der bei stöchiometrischen Anteilen von MgO und Al₂O₃ in Form von MgO ·Al₂O₃ beziehungsweise MgAl₂O₄ vorliegt. Bei solch stöchiometrischen Anteilen von Al₂O₃ und MgO im Magnesiaspinell weist dieser eine theoretische Zusammensetzung von 71,67 Masse-% Al₂O₃ und 28,33 Masse-% MgO auf. Ein Magnesiaspinell mit einem überstöchiometrischen Anteil von Al₂O₃ liegt entsprechend vor, wenn der Anteil an Al₂O₃ über 71,67 Masse-% liegt.

In dem erfindungsgemäßen Schmelzrohstoff liegt bevorzugt ein überstöchiometrischer Magnesiaspinell vor, in dem Al₂O₃ in einem Massenanteil über 71,67 Masse-% vorliegt. Nach einer bevorzugten Ausführungsform liegt Al₂O₃ in einem Massenanteil im Bereich von 72 bis 97 Masse-% im überstöchiometrischen Magnesiaspinell vor. Entsprechend liegt der Massenanteil an MgO im überstöchiometrischen Magnesiaspinell bei dieser Ausführungsform im Bereich von 3 bis 28 Masse-%. Die vorgemachten Angaben in Masse-% sind jeweils bezogen auf die Gesamtmasse des überstöchiometrischen Magnesiaspinells.

Erfindungsgemäß hat sich überraschend herausgestellt, dass die vorteilhaften Eigenschaften des erfindungsgemäßen Schmelzrohstoffs, insbesondere seine hervorragende Beständigkeit gegenüber Schlacken, zunehmend verbessert wird und insbesondere auch seine thermische Dehnung zunehmend reduziert wird, soweit der Anteil an Al₂O₃ in dem überstöchiometrischen Magnesiaspinell zunehmend einem Anteil von 93,2 Masse-% angenähert ist. Entsprechend liegt der Anteil an MgO im überstöchiometrischen Magnesiaspinell bei dieser Ausführungsform bei 6,8 Masse-%. Die vorgemachten Angaben in Masse-% sind jeweils bezogen auf die Gesamtmasse des überstöchiometrischen Magnesiaspinells.

Nach einer besonders bevorzugten Ausführungsform weist der überstöchiometrische Magnesiaspinell des erfindungsgemäßen Schmelzrohstoffs insoweit einen Anteil an Al₂O₃ im Bereich von 77 bis 97 Masse-% und einen Anteil an MgO im Bereich von 3 bis 23 Masse-% auf. Nach einer noch bevorzugteren Ausführungsform weist der überstöchiometrische Magnesiaspinell einen Anteil an Al₂O₃ im Bereich von 85 bis 95 Masse-% und einen Anteil an MgO im Bereich von 5 bis 15 Masse-% auf. Die vorgemachten Angaben in Masse-% sind jeweils bezogen auf die Gesamtmasse des überstöchiometrischen Magnesiaspinells

Ausgedrückt in Mol und normiert auf O₄ sind die Eigenschaften des erfindungsgemäßen Schmelzrohstoffs danach zunehmend verbessert, wenn der überstöchiometrische Magnesiaspinell zunehmend einer Zusammensetzung von Mg_{0,23}Al_{2,51}O₄ angenähert ist. Insoweit kann gemäß einem Ausführungsbeispiel der überstöchiometrische Magnesiaspinell vorliegen in Form von Mg_{0,0338-0,9878} Al_{2,008-2,644}O₄. Nach einer bevorzugten Ausführungsform kann der Magnesiaspinell insoweit vorliegen in Form von Mg_{0,1-0,8}Al_{2,13-2,00}O₄ und noch bevorzugter in Form von Mg_{0,16-0,52}Al_{2,3-2,0}O₄.

Bei dem Aluminiumoxicarbid Al₄O₄C handelt es sich um ein Nichtoxid, das in dieser Form als Substanz aus dem Stand der Technik bereits bekannt ist. Unbekannt war bislang jedoch die Verwendung von Al₄O₄C in einem Magnesiaspinell umfassenden Schmelzrohstoff. Völlig überraschend waren die vorteilhaften Eigenschaften eines Schmelzrohstoffes, in dem Al₄O₄C neben Magnesiaspinell mit einem überstöchiometrischen Anteil von Al₂O₃ vorliegt.

Nach einer bevorzugten Ausführungsform umfasst der erfindungsgemäße Schmelzrohstoff den überstöchiometrischen Magnesiaspinell und Al₄O₄C in den folgenden Massenanteilen:

| | |
|---|---|
| Magnesiaspinell: | 50 bis 99 Masse-%; |
| Al₄O₄C: | 1 bis 50 Masse-% |

Die vorgemachten Angaben in Masse-% sind jeweils bezogen auf die Gesamtmasse des Schmelzrohstoffs.

Erfindungsgemäß hat sich herausgestellt, dass die vorteilhaften Eigenschaften des erfindungsgemäßen Schmelzrohstoffs zunehmend verbessert werden, wenn der Anteil an überstöchiometrischem Magnesiaspinell im Schmelzrohstoff zunehmend einem Anteil von 80 Masse-% und der Anteil an Al₄O₄C im Schmelzrohstoff zunehmend einem Anteil von 20 Masse-%, jeweils bezogen auf die Gesamtmasse des Schmelzrohstoffs, angenähert ist.

Nach einer besonders bevorzugten Ausführungsform ist daher vorgesehen, dass der Schmelzrohstoff den überstöchiometrischen Magnesiaspinell und Al₄O₄C in den folgenden Massenanteilen umfasst:

| | |
|---|---|
| Magnesiaspinell: | 60 bis 95 Masse-%; |
| Al₄O₄C: | 5 bis 40 Masse-%. |

Die vorgemachten Angaben in Masse-% sind jeweils bezogen auf die Gesamtmasse des Schmelzrohstoffs.

Nach einer noch bevorzugteren Ausführungsform ist vorgesehen, dass der Schmelzrohstoff überstöchiometrischen Magnesiaspinell und Al₄O₄C in den folgenden Massenanteilen umfasst:

| | |
|---|---|
| Magnesiaspinell: | 70 bis 90 Masse-% |
| Al₄O₄C: | 10 bis 30 Masse-% |

Die vorgemachten Angaben in Masse-% sind jeweils bezogen auf die Gesamtmasse des Schmelzrohstoffs.

Erfindungsgemäß hat sich herausgestellt, dass der erfindungsgemäße Schmelzrohstoff eine besonders niedrige thermische Dehnung aufweist, soweit das Massenverhältnis von überstöchiometrischem Magnesiaspinell zu Al₄O₄C zunehmend einem Wert von 4 angenähert ist. Insoweit kann erfindungsgemäß bevorzugt vorgesehen sein, dass das Massenverhältnis von überstöchiometrischem Magnesiaspinell zu Al₄O₄C im erfindungsgemäßen Schmelzrohstoff im Bereich von 1,5 bis 19 liegt, noch bevorzugter im Bereich von 2 bis 9 und noch bevorzugter im Bereich von 2,3 bis 5,7.

Erfindungsgemäß hat sich herausgestellt, dass die vorbezeichneten, vorteilhaften Eigenschaften des erfindungsgemäßen Schmelzrohstoffs verschlechtert werden können, soweit dieser neben den mineralogischen Phasen überstöchiometrischer Magnesiaspinell und Al₄O₄C weitere Phasen beziehungsweise Substanzen aufweist. Nach einer bevorzugten Ausführungsform ist daher vorgesehen, dass der Schmelzrohstoff überstöchiometrischen Magnesiaspinell und Al₄O₄C in einer Gesamtmasse von wenigstens 95 Masse-% umfasst. Noch bevorzugter ist vorgesehen, dass der Schmelzrohstoff überstöchiometrischen Magnesiaspinell und Al₄O₄C in einer Gesamtmasse von wenigstens 97 Masse-% und noch bevorzugter in einer Gesamtmasse von wenigstens 99 Masse-% umfasst, jeweils bezogen auf die Gesamtmasse des Schmelzrohstoffs.

Entsprechend weist der erfindungsgemäße Schmelzrohstoff neben überstöchiometrischem Magnesiaspinell und Al₄O₄C weitere Phasen beziehungsweise Substanzen bevorzugt in einem Anteil unter 5 Masse-% auf, noch bevorzugter unter 3 Masse-% und noch bevorzugter unter 1 Masse-%, jeweils bezogen auf die Gesamtmasse des Schmelzrohstoffs. Solch weitere Phasen können beispielsweise in Form der hydratationsanfälligen Phasen Al₄C₃ oder Al₂OC vorliegen. Bevorzugt weist der Schmelzrohstoff Al₄C₃ in einem Anteil unter 2 Masse-%, noch bevorzugter in einem Anteil unter 1 Masse-% auf. Ferner weist der Schmelzrohstoff Al₂OC bevorzugt in einem Anteil unter 2 Masse-%, noch bevorzugter in einem Anteil unter 1 Masse-% auf. Die vorgemachten Angaben sind jeweils bezogen auf die Gesamtmasse des Schmelzrohstoffs.

Ferner hat sich erfindungsgemäß herausgestellt, dass die Eigenschaften des Schmelzrohstoffs verbessert werden können, wenn dieser die Oxide CaO, SiO₂ und Fe₂O₃ in einer Gesamtmasse unter 5 Masse-% aufweist. Nach einer bevorzugten Ausführungsform ist daher vorgesehen, dass der Schmelzrohstoff eine Gesamtmasse an CaO, SiO₂ und Fe₂O₃ unter 5 Masse-%, noch bevorzugter unter 3 Masse-% aufweist. Bevorzugt weist der Schmelzrohstoff CaO in einem Anteil unter 2 Masse-%, noch bevorzugter in einem Anteil unter 1 Masse-% auf. Ferner weist der Schmelzrohstoff SiO₂ bevorzugt in einem Anteil unter 2 Masse-%, noch bevorzugter in einem Anteil unter 1 Masse-% auf. Ferner weist der Schmelzrohstoff Fe₂O₃ bevorzugt in einem Anteil unter 2 Masse-%, noch bevorzugter in einem Anteil unter 1 Masse-% auf. Die vorgemachten Angaben sind jeweils bezogen auf die Gesamtmasse des Versatzes.

Ferner ist bevorzugt vorgesehen, dass der Schmelzrohstoff die folgenden Oxide beziehungsweise Substanzen in den nachfolgend angegebenen Massenanteilen aufweist, jeweils bezogen auf die Gesamtmasse des Schmelzrohstoffs, wobei eine, bevorzugt jedoch möglichst viele, also mehrere oder sämtliche der nachfolgend angegebenen Substanzen in den angegebenen Massenanteilen vorliegen können:

| | |
|---|---|
| ZrO₂: | unter 1 Masse-%; |
| TiO₂: | unter 1 Masse-%; |
| Gesamtmasse aus Na₂O, K₂O und Li₂O: | unter 1 Masse-%; |
| SiC: | unter 1 Masse-%. |

Der erfindungsgemäße Schmelzrohstoff weist eine sehr geringe thermische Dehnung auf. Insbesondere weist der Schmelzrohstoff eine thermische Dehnung von höchstens 8,0 ppm/K auf, bevorzugter unter 7,0 ppm/K auf und noch bevorzugter unter 6,5 ppm/K. Besonders bevorzugt weist der erfindungsgemäße Schmelzrohstoff eine thermische Dehnung im Bereich von 5,6 bis 6,4 ppm/K auf. Die thermische Dehnung ist jeweils bestimmt bei 1.000°C gemäß DIN 51045-4:2007-01.

Der erfindungsgemäße Schmelzrohstoff weist bevorzugt ein Gefüge auf, das eine Matrix in Form des überstöchiometrischen Magnesiaspinells aufweist, in welche die Phase in Form von Al₄O₄C eingelagert ist. Insbesondere ist Al₄O₄C in Form von einander isolierten Inseln in die Magnesiaspinellmatrix eingelagert. Bei einem korrosiven oder mechanischen Angriff auf den Schmelzrohstoff kann das Al₄O₄C an den durch den Angriff neu geschaffenen Oberflächen des Schmelzrohstoffs oxidieren, was mit einer Volumenzunahme einhergeht, die zum Schließen von Rissen im Schmelzrohstoff führen kann. Auf Grund dieses Selbstheilungseffektes weist der Schmelzrohstoff eine gute Beständigkeit gegenüber äußeren Angriffen auf.

Gegenstand der Erfindung ist auch ein Verfahren zur Herstellung des erfindungsgemäßen Schmelzrohstoffs. Das Verfahren zur Herstellung des erfindungsgemäßen Schmelzrohstoffs umfasst die Schritte gemäß Anspruch 8.

Zur Herstellung des erfindungsgemäßen Schmelzrohstoffs wird demnach ein Versatz zur Verfügung gestellt, der eine chemische Zusammensetzung aufweist, welche die Oxide Al₂O₃ und MgO sowie Kohlenstoff (C) umfasst. Zur Herstellung eines erfindungsgemäßen Schmelzrohstoffs aus einem solchen Versatz wird dieser zunächst derart mit Temperatur beaufschlagt, dass aus dem Versatz eine Schmelze gebildet wird, der Versatz also erschmolzen wird. Anschließend wird die gebildete Schmelze abgekühlt. Um während dieser Behandlung des Versatzes einen erfindungsgemäßen Schmelzrohstoff aus dem Versatz herzustellen, liegen Al₂O₃, MgO und C in solchen Anteilen im Versatz vor, dass bei der Bildung der Schmelze und deren anschließendem Abkühlen ein Anteil des Al₂O₃ mit dem MgO Magnesiaspinell mit einem überstöchiometrischen Anteil an Al₂O₃ ausbildet und ein weiterer Anteil des Al₂O₃ mit dem Kohlenstoff des Versatzes Al₄O₄C bildet.

Der für die Durchführung des erfindungsgemäßen Verfahrens zur Verfügung gestellte Versatz kann aus einer oder mehreren Komponenten beziehungsweise Rohstoffen bestehen, welche Al₂O₃, MgO und C umfassen.

Eine MgO umfassende Komponente kann in Form einer oder mehrere der folgenden Rohstoffe vorliegen: kaustische Magnesia, Sintermagnesia oder Schmelzmagnesia.

Eine Al₂O₃ umfassende Komponente kann in Form einer oder mehrere der folgenden Rohstoffe vorliegen: kalzinierte Tonerde, Sinterkorund oder Schmelzkorund.

Eine MgO und Al₂O₃ umfassende Komponente kann in Form von Magnesiaspinell vorliegen, bevorzugt in Form von Magnesiaspinell mit einem überstöchiometrischen Anteil von Al₂O₃.

Eine Kohlenstoff umfassende Komponente kann in Form einer oder mehrerer der folgenden Rohstoffe vorliegen: Graphit, Ruß oder Petrolkoks.

Nach einem Ausführungsbeispiel besteht der Versatz aus wenigstens einer Magnesia umfassenden Komponente, wenigstens einer Al₂O₃ umfassenden Komponente sowie einer Kohlenstoff umfassenden Komponente.

Nach einem alternativen Ausführungsbeispiel besteht der Versatz aus einer MgO und Al₂O₃ umfassenden Komponente in Form von Magnesiaspinell mit einem überstöchiometrischen Anteil von Al₂O₃ sowie einer Kohlenstoff umfassenden Komponente und gegebenenfalls noch wenigstens einer Al₂O₃ umfassenden Komponente.

Um aus einem solchen, Al₂O₃, MgO und C umfassenden Versatz bei der Durchführung des erfindungsgemäßen Verfahrens einen erfindungsgemäßen Schmelzrohstoff zu erzeugen, liegt Al₂O₃ in solchen Anteilen vor, dass bei der Bildung und dem anschließenden Abkühlen der Schmelze ein Anteil des Al₂O₃ mit dem MgO überstöchiometrischen Magnesiaspinell bilden und ein weiterer Anteil des Al₂O₃ mit dem C des Versatzes Al₄O₄C bildet.

Während der Bildung und dem anschließenden Abkühlen der Schmelze reagieren ein Anteil des Al₂O₃ und der Kohlenstoff des Versatzes gemäß der folgenden Gleichung (I) miteinander:

2 Al₂O₃ + 3 C → Al₄O₄C + 2 CO (I).

Ferner ist bekannt, dass Al₂O₃ und MgO gemäß der folgenden Gleichung (II) zu einem stöchiometrischen Magnesiaspinell miteinander reagieren:

Al₂O₃ + MgO → MgAl₂O₄ (II).

Gemäß der Stöchiometrie reagieren dabei jeweils ein Mol Al₂O₃ und ein Mol MgO zu einem stöchiometrischen Magnesiaspinell. Zur Bildung eines Magnesiaspinells mit einem überstöchiometrischen Anteil an Al₂O₃ muss daher das Molverhältnis von Al₂O₃ zu MgO größer als 1 sein.

Auf dieser Grundlage ist es möglich, die Anteile an Al₂O₃, MgO und C in dem für das Verfahren zur Verfügung gestellten Versatz in solchen Anteilen vorzusehen, dass sich bei der Durchführung des erfindungsgemäßen Verfahrens ein erfindungsgemäßer Schmelzrohstoff bildet, welcher Magnesiaspinell mit einem überstöchiometrischen Anteil von Al₂O₃ und Al₄O₄C umfasst.

Erfindungsgemäß hat sich herausgestellt, dass bei der Durchführung des erfindungsgemäßen Verfahrens MgO in geringen Anteilen gasförmig aus der Schmelze entweichen kann. Ferner hat sich erfindungsgemäß herausgestellt, dass C in der Schmelze in höheren Anteilen CO bilden kann als gemäß der Stöchiometrie nach Gleichung (I). Insofern kann erfindungsgemäß vorgesehen sein, dass in einem für die Durchführung des erfindungsgemäßen Verfahrens zur Verfügung gestellte Versatz MgO und C in höheren Anteilen vorliegt, als dies für die Bildung eines erfindungsgemäßen Schmelzrohstoffs gemäß den Gleichungen (I) und (II) notwendig wäre.

Nach einem Ausführungsbeispiel kann der für das erfindungsgemäße Verfahren zur Verfügung gestellte Versatz eine chemische Zusammensetzung aufweisen, welche Al₂O₃, MgO und C in den folgenden Massenanteilen umfasst:

| | |
|---|---|
| Al₂O₃: | 77,5 bis 98,5 Masse-%; |
| MgO: | 1 bis 22 Masse-%; |
| C: | 0,5 bis 15 Masse-%. |

Die vorgemachten Angaben in Masse-% sind jeweils bezogen auf die Gesamtmasse des Versatzes.

Wie oben ausgeführt, wurde erfindungsgemäß festgestellt, dass die vorteilhaften Eigenschaften des erfindungsgemäßen Schmelzrohstoffs zunehmend verbessert werden, soweit der Anteil an überstöchiometrischem Magnesiaspinell zunehmend einem Massenanteil von 80 % und der Anteil an Al₄O₄C zunehmend einen Massenanteil von 20 Masse-% angenähert wird. Ein erfindungsgemäßer Schmelzrohstoff mit einem Massenanteil von 80 % an überstöchiometrischem Magnesiaspinell und mit einem Massenanteil von 20 % Al₄O₄C kann durch das erfindungsgemäße Verfahren insbesondere dann hergestellt werden, wenn der für das erfindungsgemäße Verfahren zur Verfügung gestellte Versatz eine chemische Zusammensetzung aufweisen, welche Al₂O₃, MgO und C in den folgenden Massenanteilen umfasst:

| | |
|---|---|
| Al₂O₃: | 82 Masse-%; |
| MgO: | 8 Masse-%; |
| C: | 10 Masse-%. |

Die vorgemachten Angaben in Masse-% sind jeweils bezogen auf die Gesamtmasse des Versatzes.

Um die Massenanteile an Al₂O₃, MgO und C im Versatz an diese besonders vorteilhaften Anteile von 82 Masse-%, 8 Masse-% und 10 Masse-% anzunähern, kann nach einer bevorzugten Ausführungsform vorgesehen sein, dass der für das erfindungsgemäße Verfahren zur Verfügung gestellte Versatz eine chemische Zusammensetzung aufweist, welche Al₂O₃, MgO und C in den folgenden Massenanteilen umfasst:

| | |
|---|---|
| Al₂O₃: | 78 bis 90 Masse-%; |
| MgO: | 4 bis 17 Masse-%; |
| C: | 5 bis 13 Masse-%. |

Die vorgemachten Angaben in Masse-% sind jeweils bezogen auf die Gesamtmasse des Versatzes.

Noch bevorzugter kann vorgesehen sein, dass der für das erfindungsgemäße Verfahren zur Verfügung gestellte Versatz eine chemische Zusammensetzung aufweist, welche Al₂O₃, MgO und C in den folgenden Massenanteilen umfasst:

| | |
|---|---|
| Al₂O₃: | 78 bis 85 Masse-%; |
| MgO: | 6 bis 15 Masse-%; |
| C: | 8 bis 12 Masse-%. |

Die vorgemachten Angaben in Masse-% sind jeweils bezogen auf die Gesamtmasse des Versatzes.

Nach einer bevorzugten Ausführungsform ist daher vorgesehen, dass der Versatz eine chemische Zusammensetzung aufweisen, welche Al₂O₃, MgO und C in einer Gesamtmasse von wenigstens 95 Masse-% umfasst, noch bevorzugter in einer Gesamtmasse von wenigstens 97 Masse-% und noch bevorzugter in einer Gesamtmasse von wenigstens 99 Masse-%, jeweils bezogen auf die Gesamtmasse des Versatzes.

Ferner kann bevorzugt vorgesehen sein, dass der Versatz eine chemische Zusammensetzung aufweist, der die Oxide CaO, SiO₂ und Fe₂O₃ in einer Gesamtmasse unter 5 Masse-% aufweist, noch bevorzugter unter 3 Masse-%. Bevorzugt weist der Versatz eine chemische Zusammensetzung auf, die CaO in einem Anteil unter 2 Masse-%, noch bevorzugter in einem Anteil unter 1 Masse-% aufweist. Ferner weist der Versatz bevorzugt eine chemische Zusammensetzung auf, die SiO₂ in einem Anteil unter 2 Masse-%, noch bevorzugter in einem Anteil unter 1 Masse-% aufweist. Ferner weist der Versatz bevorzugt eine chemische Zusammensetzung auf, die Fe₂O₃ in einem Anteil unter 2 Masse-%, noch bevorzugter in einem Anteil unter 1 Masse-% aufeist. Die vorgemachten Angaben sind jeweils bezogen auf die Gesamtmasse des Versatzes.

Ferner ist bevorzugt vorgesehen, dass der Versatz eine chemische Zusammensetzung aufweist, die die folgenden Oxide in den nachfolgend angegebenen Massenanteilen aufweist, jeweils bezogen auf die Gesamtmasse des Versatzes, wobei eine, bevorzugt jedoch möglichst viele, also mehrere oder sämtliche der nachfolgend angegebenen Substanzen in den angegebenen Massenanteilen vorliegen können:

| | |
|---|---|
| ZrO₂: | unter 1 Masse-%; |
| TiO₂: | unter 1 Masse-%; |
| Gesamtmasse aus Na₂O, K₂O und Li₂O: | unter 1 Masse-%. |

Zur Bildung einer Schmelze aus dem Versatz kann dieser durch die aus dem Stand der Technik bekannten Technologien derart mit Temperatur beaufschlagt werden, dass der Versatz aufschmilzt und eine Schmelze bildet. Insbesondere kann die Schmelze in einem Elektrolichtbogenofen derart mit Temperatur beaufschlagt werden, dass sich aus dem Versatz eine Schmelze bildet. Bevorzugt kann der Versatz, insbesondere in einem Elektrolichtbogenofen, bei einer Temperatur im Bereich von 2.100°C erschmolzen werden.

Anschließend wird die Schmelze abgekühlt, insbesondere auf Raumtemperatur. Während des Abkühlens bildet ein Anteil des Al₂O₃ mit dem MgO überstöchiometrischen Magnesiaspinell. Ferner bildet ein weiterer Anteil des Al₂O₃ während des Abkühlens der Schmelze mit C Al₄O₄C.

Der danach erhaltene, erfindungsgemäße Schmelzrohstoff kann bevorzugt als Rohstoff zur Herstellung eines feuerfesten Erzeugnisses zur Verfügung gestellt werden.

Gegenstand der Erfindung ist auch die Verwendung des erfindungsgemäßen Schmelzrohstoffs zur Herstellung eines feuerfesten Erzeugnisses mit den folgenden Maßgaben:
Zur Verfügungstellung eines erfindungsgemäßen Schmelzrohstoffs;
Mischen des Schmelzrohstoffs mit wenigstens einem weiteren Rohstoff zur Herstellung eines feuerfesten Versatzes;
Beaufschlagen des Versatzes mit Temperatur.

Bevorzugt wird der erfindungsgemäße Schmelzrohstoff als Schüttgut, also als körniges Gut beziehungsweise Korngemenge zur Verfügung gestellt.

Der Schmelzrohstoff kann mit einem oder mehreren weiteren Rohstoffen zur Herstellung eines feuerfesten Versatzes gemischt werden. Bei diesen weiteren Rohstoffen kann es sich grundsätzlich um einen oder mehrere beliebige Rohstoffe handeln, die aus dem Stand der Technik zur Herstellung eines feuerfesten Erzeugnisses bekannt sind. Bevorzugt wird der erfindungsgemäße Schmelzrohstoff mit einem oder mehreren weiteren Rohstoffen auf Basis wenigstens eines der Oxide MgO oder Al₂O₃ gemischt, beispielsweise mit einem oder mehreren der folgenden weiteren Rohstoffe: Magnesia, Tonerde oder Magnesiaspinell. Magnesia kann beispielsweise in Form eines oder mehrerer der Rohstoffe Sintermagnesia oder Schmelzmagnesia vorliegen. Tonerde kann beispielsweise in Form eines oder mehrerer der Rohstoffe kalzinierte Tonerde, Schmelzkorund oder Sinterkorund vorliegen. Magnesiaspinell kann beispielsweise in Form eines oder mehrerer der Rohstoffe Sinterspinell oder Schmelzspinell vorliegen.

Der Versatz kann bevorzugt zur Herstellung eines gesinterten, also eines keramischen feuerfesten Erzeugnisses verwendet werden. Hierzu kann der Versatz beispielsweise mit einem Bindemittel, insbesondere einem organischen Bindemittel vermischt werden. Als organisches Bindemittel kann beispielsweise Ligninsulfonat verwendet werden.

Alternativ kann der Versatz auch zur Herstellung eines Kohlenstoffsteines verwendet werden, also eines feuerfesten Erzeugnisses mit einer Kohlenstoffbindung. Insoweit kann der erfindungsgemäße Schmelzrohstoff mit einem oder mehreren der vorbezeichneten Rohstoffe auf Basis wenigstens eines der Oxide MgO oder Al₂O₃ und darüber hinaus mit einem üblichen Kohlenstoffträger - insbesondere Graphit, Ruß oder Pech - gemischt werden.

Der Versatz kann anschließend geformt werden, beispielsweise durch Pressen, und anschließend beispielsweise getrocknet werden.

Schließlich wird der, gegebenenfalls geformte und getrocknete, Versatz mit Temperatur beaufschlagt. Insbesondere wird der Versatz zur Herstellung eines gesinterten Erzeugnisses einem keramischen Brand unterworfen, also einem Sinterbrand, bei dem die Komponenten des Versatzes zu einem feuerfesten keramischen Erzeugnis sintern. Anschließend liegt ein feuerfestes keramisches Erzeugnis in Form eines Sinterkörpers vor.

Erfindungsgemäß hat sich herausgestellt, dass durch die erfindungsgemäße Verwendung des erfindungsgemäßen Schmelzrohstoffs zur Herstellung eines feuerfesten Erzeugnisses ein solches Erzeugnis mit einer nur geringen thermischen Dehnung und einer hervorragenden Beständigkeit gegenüber basischen und nicht-basischen Angriffen herstellbar ist. Insoweit hat sich erfindungsgemäß beispielsweise herausgestellt, dass unter Verwendung des erfindungsgemäßen Schmelzrohstoffs ein feuerfestes Erzeugnis in Form eines Steines zur Ausmauerung (Zustellung) eines Zementdrehrohrofens herstellbar ist, insbesondere in Form eines wie vorstehend beschriebenen Sinterkörpers. Gegenstand der Erfindung ist auch ein solcher, unter Verwendung des erfindungsgemäßen Schmelzrohstoffs hergestellter Stein zur Ausmauerung eines Zementdrehrohrofens.

Weitere Merkmale der Erfindung ergeben sich aus den Ansprüchen und dem nachfolgenden Ausführungsbeispiel.

Sämtliche Merkmale der Erfindung können, einzeln oder in Kombination, beliebig miteinander kombiniert sein.

Anschließend wird ein Ausführungsbeispiel der Erfindung näher erläutert.

### Ausführungsbeispiel

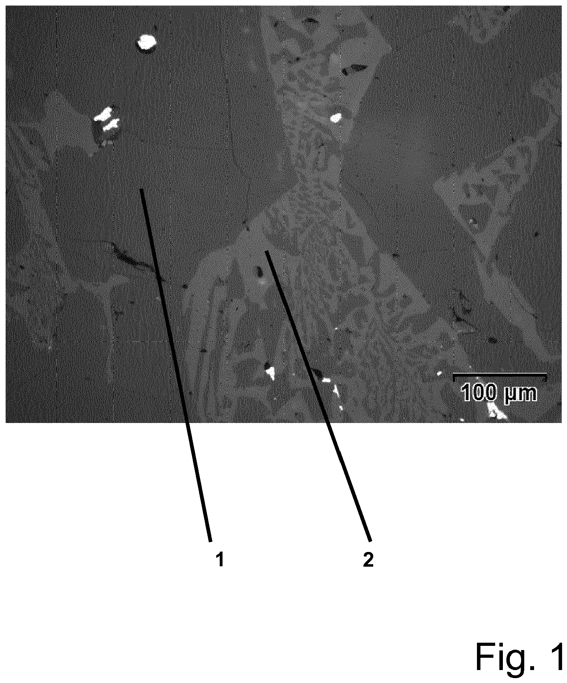

In der nachfolgenden Beschreibung des Ausführungsbeispiels zeigt
- Figur 1: eine rasterelektronenmikroskopische Aufnahme eines Anschliffs des gemäß dem Ausführungsbeispiel hergestellten Schmelzrohstoffs

Zunächst wurde ein synthetischer Rohstoff auf Basis der Oxide MgO und Al₂O₃ hergestellt. Hierzu wurden die Ausgangsrohstoffe 9 Masse-% kaustische Magnesia (mit einer Reinheit von über 99 Masse-% MgO) und 91 Masse-% kalzinierte Tonerde (mit einer Reinheit von über 99 Masse-% Al₂O₃) miteinander gemischt. Die Mischung wurde granuliert und anschließend für fünf Stunden mit einer Temperatur von 1.700°C beaufschlagt. Bei dieser Temperaturbeaufschlagung bildete sich aus den Ausgangsrohstoffen ein synthetischer Rohstoff folgender chemischer Zusammensetzung: 8,77 Masse-% MgO; 90,56 Masse-% Al₂O₃; 0,67 Masse-% weitere Oxide (insbesondere SiO₂, CaO, Fe₂O₃ und Na₂O).

Dieser synthetische Rohstoff wurde zu einem Korngemenge mit einer Korngröße im Bereich von > 0 bis 1 mm aufbereitet.

Zur Durchführung des erfindungsgemäßen Verfahrens wurde ein Versatz zur Verfügung gestellt, der 90 Masse-% dieses synthetischen Rohstoffs und 10 Masse-% Petrolkoks (mit einer Reinheit von über 99 Masse-% Kohlenstoff) aufwies.

Danach wies der Versatz die folgende chemische Zusammensetzung auf:

| | |
|---|---|
| Al₂O₃: | 81,5 Masse-%; |
| MgO: | 7,9 Masse-%; |
| C: | 9,9 Masse-%; |
| Rest: | 0,7 Masse-%. |

Dieser Versatz wurde anschließend im Elektrolichtbogenofen bei einer Temperatur von 2.100°C erschmolzen. Die gebildete Schmelze wurde anschließend auf Raumtemperatur abgekühlt. Die auf Raumtemperatur abgekühlte Schmelze stellte ein Ausführungsbeispiel eines erfindungsgemäßen Schmelzrohstoffs dar.

Der erhaltene Schmelzrohstoff wies eine mineralogische Zusammensetzung auf, welche 79,8 Masse-% Magnesiaspinell mit einem überstöchiometrischen Anteil von Al₂O₃ und 19,6 Masse-% Al₄O₄C neben einem Rest (insbesondere SiO₂, CaO, Fe₂O₃ und Na₂O) mit einem Anteil von 0,6 Masse-% aufwies.

Der Magnesiaspinell mit einem überstöchiometrischen Anteil von Al₂O₃ wies, bezogen auf die Masse des Magnesiaspinells, einen Anteil an MgO von 6,76 Masse-% und einen Anteil an Al₂O₃ von 93,24 Masse-% auf. Ausgedrückt in Mol und normiert auf 4 Mole Sauerstoff ergibt sich damit eine mineralogische Phase Mg_{0,23}Al_{2,51}O₄.

Die thermische Dehnung des Schmelzrohstoffs wurde gemäß DIN 51045-4:2007-01 bei 1.000°C zu 5,92 ppm/K bestimmt (Mittelwert aus drei Messungen).

Von dem gemäß diesem Ausführungsbeispiel hergestellten Schmelzrohstoff wurde eine rasterelektronenmikroskopische Aufnahme eines Anschliffs angefertigt. Diese Aufnahme ist in Figur 1 wiedergegeben. Der schwarze Balken unten rechts in der Aufnahme entspricht einer Länge von 100µm.

Gut zu erkennen ist die als dunklerer Bereich erscheinende Matrix aus überstöchiometrischem Spinell, die mit dem Bezugszeichen 1 gekennzeichnet ist. In diese Matrix 1 ist die die mit dem Bezugszeichen 2 gekennzeichnete Phase Al₄O₄C eingelagert, die als hellerer Bereich erscheint.

## Patentansprüche

1. Schmelzrohstoff zu Herstellung eines feuerfesten Erzeugnisses, der die folgenden mineralogischen Phasen umfasst:
Magnesiaspinell mit einem überstöchiometrischen Anteil von Al₂O₃,
Al₄O₄C;
Al₄C₃ in einem Anteil unter 2 Masse-%.

2. Schmelzrohstoff nach Anspruch 1, der die folgenden mineralogischen Phasen in den folgenden Anteilen umfasst:
Magnesiaspinell mit einem überstöchiometrischen Anteil von Al₂O₃: 50 bis 99 Masse-%;
Al₄O₄C: 1 bis 50 Masse-%.

3. Schmelzrohstoff nach Anspruch 1, der die folgenden mineralogischen Phasen in den folgenden Anteilen umfasst:
Magnesiaspinell mit einem überstöchiometrischen Anteil von Al₂O₃: 70 bis 90 Masse-%;
Al₄O₄C: 10 bis 30 Masse-%.

4. Schmelzrohstoff nach wenigstens einem der vorhergehenden Ansprüche, wobei der Magnesiaspinell mit einem überstöchiometrischen Anteil von Al₂O₃ einen Anteil an Al₂O₃ im Bereich von 77 bis 97 Masse-% aufweist.

5. Schmelzrohstoff nach wenigstens einem der vorhergehenden Ansprüche, der Magnesiaspinell mit einem überstöchiometrischen Anteil von Al₂O₃ und Al₄O₄C in einer Gesamtmasse von wenigstens 95 Masse-% aufweist.

6. Schmelzrohstoff nach wenigstens einem der vorhergehenden Ansprüche, der Magnesiaspinell mit einem überstöchiometrischen Anteil von Al₂O₃ und Al₄O₄C in einer Gesamtmasse von wenigstens 99 Masse-% aufweist.

7. Schmelzrohstoff nach wenigstens einem der vorhergehenden Ansprüche mit einer thermischen Dehnung von höchstens 8,0 ppm/K.

8. Verfahren zur Herstellung eines Schmelzrohstoffes nach wenigstens einem der vorhergehenden Ansprüche, umfassend die folgenden Schritte:
Zur Verfügungstellung eines Versatzes, der eine chemische Zusammensetzung aufweist, welche umfasst:
Al₂O₃,
MgO; und
C;
Bilden einer Schmelze aus dem Versatz;
Abkühlen der Schmelze;
wobei Al₂O₃, MgO und C in solchen Anteilen vorliegen, dass beim Bilden und Abkühlen der Schmelze ein Anteil des Al₂O₃ mit MgO Magnesiaspinell mit einem überstöchiometrischen Anteil von Al₂O₃ bildet, ein Anteil des Al₂O₃ mit C Al₄O₄C bildet und der Schmelzrohstoff Al₄C₃ in einem Anteil unter 2 Masse-% aufweist.

9. Verfahren nach Anspruch 8, wobei der Versatz eine chemische Zusammensetzung aufweist, welche die folgenden Substanzen in den folgenden Anteilen umfasst:
| | |
|---|---|
| Al₂O₃: | 77,5 bis 98,5 Massen-%; |
| MgO: | 1 bis 22 Massen-%; |
| C: | 0,5 bis 15 Massen-%. |

10. Verfahren nach Anspruch 8, wobei der Versatz eine chemische Zusammensetzung aufweist, welche die folgenden Substanzen in den folgenden Anteilen umfasst:
| | |
|---|---|
| Al₂O₃: | 78 bis 85 Masse-%; |
| MgO: | 6 bis 15 Masse-%; |
| C: | 8 bis 12 Masse-%. |

11. Verwendung eines Schmelzrohstoffs zur Herstellung eines feuerfesten Erzeugnisses mit den folgenden Maßgaben:
Zur Verfügungstellung eines Schmelzrohstoffs, der die folgenden mineralogischen Phasen umfasst:
Magnesiaspinell mit einem überstöchiometrischen Anteil von Al₂O₃,
Al₄O₄C;
Mischen des Schmelzrohstoffs mit wenigstens einem weiteren Rohstoff zur Herstellung eines feuerfesten Versatzes;
Beaufschlagen des Versatzes mit Temperatur.

## Claims

1. Fused raw material for the production of a refractory product comprising the following mineralogical phases:
Magnesia spinel with a hyperstoichiometric proportion of Al₂O₃;
Al₄O₄C;
Al₄C₃ in a proportion of less than 2% by mass.

2. Fused raw material according to claim 1, comprising the following mineralogical phases in the following proportions:
Magnesia spinel with a hyperstoichiometric proportion of Al₂O₃: 50 to 99% by mass;
Al₄O₄C: 1 to 50% by mass.

3. Fused raw material according to claim 1, comprising the following mineralogical phases in the following proportions:
Magnesia spinel with a hyperstoichiometric proportion of Al₂O₃: 70 to 90% by mass;
Al₄O₄C: 10 to 30% by mass.

4. Fused raw material according to at least one of the preceding claims, wherein the magnesia spinel with a hyperstoichiometric proportion of Al₂O3 has a proportion of Al₂O₃ in the range from 77 to 97% by mass.

5. Fused raw material according to at least one of the preceding claims, comprising magnesia spinel with a hyperstoichiometric proportion of Al₂O₃ and Al₄O₄C in a total mass of at least 95% by mass.

6. Fused raw material according to at least one of the preceding claims, comprising magnesia spinel with a hyperstoichiometric proportion of Al₂O₃ and Al₄O₄C in a total mass of at least 99% by mass.

7. Fused raw material according to at least one of the preceding claims, having a thermal expansion of at most 8.0 ppm/K.

8. Method for producing a fused raw material according to at least one of the preceding claims, comprising the following steps:
Providing a batch having a chemical composition which comprises
Al₂O₃;
MgO; and
C;
forming a melt from the batch;
cooling the melt;
wherein Al₂O₃, MgO and C are present in such proportions that, when the melt is formed and cooled, a portion of the Al₂O₃ with MgO forms magnesia spinel with a hyperstoichiometric proportion of Al₂O₃, a portion of the Al₂O₃ with C forms Al₄O₄C and the fused raw material comprises Al₄C₃ in a proportion of less than 2% by mass.

9. The method according to claim 8, wherein the batch has a chemical composition comprising the following substances in the following proportions:
| | |
|---|---|
| Al₂O₃: | 77.5 to 98.5% by mass; |
| MgO: | 1 to 22% by mass; |
| C: | 0.5 to 15% by mass. |

10. The method according to claim 8, wherein the batch has a chemical composition comprising the following substances in the following proportions:
| | |
|---|---|
| Al₂O₃: | 78 to 85% by mass; |
| MgO: | 6 to 15% by mass; |
| C: | 8 to 12% by mass. |

11. Use of a fused raw material for the production of a refractory product with the following proportions:
Provision of a fused raw material comprising the following mineralogical phases:
Magnesia spinel with a hyperstoichiometric proportion of Al₂O₃;
Al₄O₄C;
mixing the fused raw material with at least one additional raw material to produce a refractory batch;
application of temperature to the batch.

## Revendications

1. Matière première fondue, destinée à fabriquer un produit réfractaire, laquelle comprend les phases minéralogiques suivantes :
Spinelle de magnésie ayant une proportion plus que stœchiométrique d'Al₂O₃ ;
Al₄O₄C ;
Al₄C₃ dans une proportion inférieure à 2 % en masse.

2. Matière première fondue selon la revendication 1, comprenant les phases minéralogiques suivantes dans les proportions suivantes :
spinelle de magnésie ayant une proportion plus que stœchiométrique d'Al₂O₃ : 50 à 99 % en masse ;
Al₄O₄C : 1 à 50 % en masse.

3. Matière première fondue selon la revendication 1, comprenant les phases minéralogiques suivantes dans les dans proportions suivantes :
spinelle de magnésie ayant une proportion plus que stœchiométrique d'Al₂O₃ : 70 à 90 % en masse ;
Al₄O₄C : 10 à 30 % en masse.

4. Matière première fondue selon au moins une des revendications précédentes, ledit spinelle de magnésie ayant une proportion plus que stœchiométrique d'Al₂O₃ comportant une proportion d'Al₂O₃ comprise entre 77 et 97 % en masse.

5. Matière première fondue selon au moins une des revendications précédentes, laquelle comporte du spinelle de magnésie ayant une proportion plus que stœchiométrique d'Al₂O₃ et de l'Al₄O₄C de manière à ce que leur masse totale soit supérieure ou égale à 95 % en masse.

6. Matière première fondue selon au moins une des revendications précédentes, laquelle comporte ledit spinelle de magnésie ayant une proportion plus que stœchiométrique d'Al₂O₃ et de l'Al₄O₄C de manière à ce que leur masse totale soit supérieure ou égale à 99 % en masse.

7. Matière première fondue selon au moins une des revendications précédentes, sa dilatation thermique étant inférieure ou égale à 8,0 ppm/K.

8. Procédé de fabrication d'une matière première fondue selon au moins une des revendications précédentes, lequel comprend les étapes suivantes :
mise à disposition d'un mélange ayant une composition chimique laquelle comprend :
Al₂O₃ ;
MgO ; et
C ;
formation d'une matière en fusion à partir dudit mélange ;
refroidissement de ladite matière en fusion ;
Al₂O₃, MgO et C étant présents dans des proportions telles que, lors de la formation et du refroidissement de la matière en fusion, une proportion d'Al₂O₃ forme, avec du MgO, du spinelle de magnésie ayant une proportion plus que stœchiométrique d'Al₂O₃, une proportion d'Al₂O₃ forme, avec du C, de l'Al₄O₄C, et la matière première fondue comporte de l'Al₄C₃ dans une proportion inférieure à 2 % en masse.

9. Procédé selon la revendication 8, ledit mélange ayant une composition chimique laquelle comprend les substances suivantes dans les proportions suivantes :
| | |
|---|---|
| Al₂O₃ : | 77,5 à 98,5 % en masse ; |
| MgO : | 1 à 22 % en masse ; |
| C : | 0,5 à 15 % en masse. |

10. Procédé selon la revendication 8, ledit mélange ayant une composition chimique laquelle comprend les substances suivantes dans les proportions suivantes :
| | |
|---|---|
| Al₂O₃ : | 78 à 85 % en masse ; |
| MgO: | 6 à 15 % en masse ; |
| C : | 8 à 12 % en masse. |

11. Utilisation d'une matière première fondue pour préparer un produit réfractaire selon les conditions suivantes :
mise à disposition d'une matière première fondue comprenant les phases minéralogiques suivantes :
spinelle de magnésie ayant une proportion plus que stœchiométrique d' Al₂O₃ ;
Al₄O₄C ;
que la matière première fondue soit mélangée avec au moins une autre matière première afin de préparer un mélange réfractaire ;
que ledit mélange soit soumis à une augmentation de la température.
